# EUROPEAN PATENT APPLICATION

(11) **EP 2 068 238 A2**
(43) Date of publication of application: **10.06.2009**
(21) Application number: 08158726.3
(22) Date of filing: 23.06.2008
(51) Int. Cl.: G06F 3/14

(54) **Display control method and display system**

(30) Priority: 21.08.2007 KR 20070084200
(71) Applicant: Samsung Electronics Co., Ltd., Yeongtong-gu Suwon-si, Gyeonggi-do (KR)
(72) Inventor: Yun, Young-kyan, Gyeonggi-do (KR)
(74) Representative: D'Halleweyn, Nele Veerle Trees Gertrudis

(57) **Abstract**

A display control method and a display system using the method are provided. The display control method by which a single host device controls a plurality of display apparatuses includes generating first video data representing a first video displayed on a first display apparatus; generating second video data representing a second video displayed on a second display apparatus; determining whether a video exchange command is input so that the second video is displayed on the first display apparatus; and controlling the display apparatuses so that the first video is exchanged with the second video to display the second video on the first display apparatus, if it is determined that the video exchange command is input. Therefore, a video displayed on a display apparatus may be exchanged with another video displayed on another display apparatus, thereby increasing user convenience.

## Description

This application claims priority from Korean Patent Application No. 10-2007-0084200, filed on August 21, 2007, in the Korean Intellectual Property Office, the disclosure of which is incorporated herein by reference in its entirety.

Apparatuses and methods consistent with the present invention relate to controlling a display, and more particularly, to displaying video on a plurality of display apparatuses. The invention further relates to a computer readable recording medium for storing such a method.

Display systems are capable of displaying data such as video received from external sources. An example of a display system is a personal computer (PC) in which a monitor functions as a display means, and a host device transmits video to the monitor. A single monitor is generally connected to a single host device in order to display video, but recently, it has become common for users to connect two or more monitors to a single host device in order to have a more convenient work environment.

Even when two or more monitors are connected to a single host device, users usually perform tasks while primarily viewing a single monitor. A monitor which is used for work more than other monitors is referred to a main monitor. When a variety of videos are displayed on a plurality of monitors, it is difficult for a user to perform tasks using a video displayed on a monitor far away from the user. Accordingly, the usefulness of using a plurality of monitors is reduced.

The method of the invention is distinguished by the features of claim 1, and the system of the invention is distinguished by the features of claim 12.

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides a display system in which a plurality of display apparatuses are connected to a single host device, so that a video displayed on a display apparatus may be exchanged with another video displayed on another display apparatus, which increases user convenience.

According to an aspect of the present invention, there is provided a display control method by which a single host device controls a plurality of display apparatuses, the method comprising generating first video data representing a video displayed on a first display apparatus; generating second video data representing a video displayed on a second display apparatus; determining whether a video exchange command is input so that the video displayed on the second display apparatus is displayed on the first display apparatus; and controlling the plurality of display apparatuses so that the video displayed on the first display apparatus is exchanged with the video corresponding to the second video data to display the video corresponding to the second video data on the first display apparatus, if it is determined that the video exchange command is input.

The controlling may comprise controlling the plurality of display apparatuses so that the video displayed on the second display apparatus is exchanged with the video corresponding to the first video data to display the video corresponding to the first video data on the second display apparatus, if it is determined that the video exchange command is input.

The generating of the first video data may comprise generating first packets containing the first video data, and the generating of the second video data may comprise generating second packets containing the second video data.

Each of the first packets and the second packets may comprise a header block comprising a source address field and a destination address field, and a data block comprising video data.

The controlling may comprise controlling the plurality of display apparatuses so that the data block of the first packets may comprise the second video data representing the video displayed on the second display apparatus, instead of the first video data, and so that the data block of the second packets may comprise the first video data representing the video displayed on the first display apparatus, instead of the second video data.

The controlling may comprise controlling the plurality of display apparatuses so that the destination address field of the first packets may comprise an address for the second display apparatus, instead of an address for the first display apparatus, and so that the destination address field of the second packets may comprise the address for the first display apparatus, instead of the address for the second display apparatus.

The method may further comprise generating a list of the display apparatuses controlled by the host device using symbols representing each of the plurality of display apparatuses.

The video data transmitted to the second display apparatus may be video data transmitted from the host device through the first display apparatus.

According to another aspect of the present invention, there is provided a display control method by which a single host device controls a plurality of display apparatuses using a universal serial bus (USB) interface, the method comprising determining whether a video exchange command is input to exchange a video displayed on a first display apparatus with a video displayed on a second display apparatus; and controlling the plurality of display apparatuses so that the video displayed on the first display apparatus is exchanged with the video displayed on the second display apparatus to display the video displayed on the second display apparatus on the first display apparatus, if it is determined that the video exchange command is input.

The controlling may comprise exchanging first packets corresponding to the video displayed on the first display apparatus with second packets corresponding to the video displayed on the second display apparatus, and transmitting the second packets to the first display apparatus, if it is determined that the video exchange command is input.

According to another aspect of the present invention, there is provided a display system in which a single host device controls a plurality of display apparatuses. The host device may comprise an interface which transmits video data to the plurality of display apparatuses; and a controller which generates first video data representing a video displayed on a first display apparatus and second video data representing a video displayed on a second display apparatus. If it is determined that a video exchange command is input to cause the video displayed on the second display apparatus to be displayed on the first display apparatus, the controller may control the first display apparatus so that the video displayed on the first display apparatus is exchanged with the video corresponding to the second video data to display the video corresponding to the second video data on the first display apparatus.

The controller may control the second display apparatus so that the video displayed on the second display apparatus is exchanged with the video corresponding to the first video data to display the video corresponding to the first video data on the second display apparatus, if it is determined that the video exchange command is input.

The controller may generate first packets containing the first video data, and second packets containing the second video data.

Each of the first packets and the second packets may comprise a header block comprising a source address field and a destination address field, and a data block comprising video data.

The controller may control the plurality of display apparatuses so that the data block of the first packets may comprise the second video data representing the video displayed on the second display apparatus, instead of the first video data, and so that the data block of the second packets may comprise the first video data representing the video displayed on the first display apparatus, instead of the second video data.

The controller may control the plurality of display apparatuses so that the destination address field of the first packets may comprise an address for the second display apparatus, instead of an address for the first display apparatus, and so that the destination address field of the second packets may comprise the address for the first display apparatus, instead of the address for the second display apparatus.

The controller may generate a list of the display apparatuses controlled by the host device using symbols representing each of the plurality of display apparatuses.

The video data transmitted to the second display apparatus may be video data transmitted from the host device through the first display apparatus.

The interface may be a universal serial bus (USB) interface.

### BRIEF DESCRIPTION OF THE DRAWINGS

The above aspects and other aspects of the present invention will become apparent and more readily appreciated from the following description of the exemplary embodiments, taken in conjunction with the accompany drawings, in which:
FIG. 1 is a view schematically showing a display system according to an exemplary embodiment of the present invention;
FIG. 2 is a block diagram showing a host device according to an exemplary embodiment of the present invention;
FIG. 3 is a block diagram showing a first monitor used as a main monitor, according to an exemplary embodiment of the present invention;
FIG. 4 is a flowchart explaining a process of exchanging videos and displaying the exchanged videos, according to an exemplary embodiment of the present invention;
FIGS. 5A and 5B are diagrams showing packets generated according to whether a video exchange command is input, according to an exemplary embodiment of the present invention;
FIG. 6 is a diagram showing an example of a monitor list according to an exemplary embodiment of the present invention; and
FIG. 7 is a block diagram showing another display system to which the present invention is applicable.

### DETAILED DESCRIPTION OF EXEMPLARY EMBODIMENTS

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the exemplary embodiments of the present invention can be carried out without those specifically defined matters. Also, well-known functions or constructions are not described in detail since they would obscure the invention with unnecessary detail.

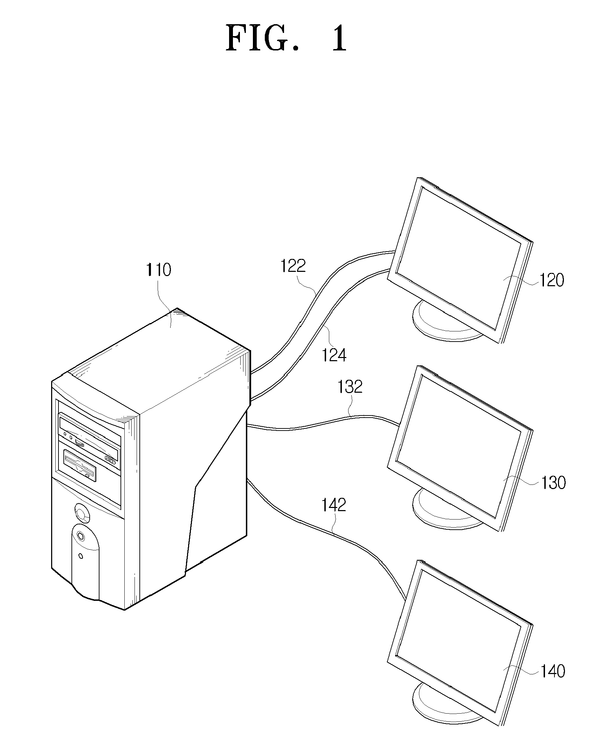

FIG. 1 is a view schematically showing a display system according to an exemplary embodiment of the present invention. A personal computer (PC), which is provided as an example of the display system, comprises a host device 110 and a plurality of monitors 120, 130 and 140 functioning as display apparatuses. The host device 110 may be connected to the plurality of monitors 120, 130 and 140 via universal serial bus (USB) cables 122, 132 and 142, so that the host device 110 may communicate with the monitors 120, 130 and 140 via the USB cables 122, 132 and 142. Accordingly, the host device 110 may transmit packets in USB format containing a single type of videos to the plurality of monitors 120, 130 and 140, or may transmit packets in USB format containing different types of videos to the plurality of monitors 120, 130 and 140. At least one of the plurality of monitors 120, 130 and 140 may communicate with the host device 110 via not only the USB cable but also via a digital visual interface (DVI) cable or a D-sub cable. The host device 110 may transmit video packets in DVI format to the monitor connected via the DVI cable, or may transmit video packets in D-sub format to the monitor connected via the D-sub cable.

For convenience of description, in this exemplary embodiment, the host device 110 is connected to the monitors 120, 130 and 140 via the USB cables 122, 132 and 142, and in particular, the first monitor 120 is connected to the host device 110 through the USB cable 122 and a DVI cable 124.

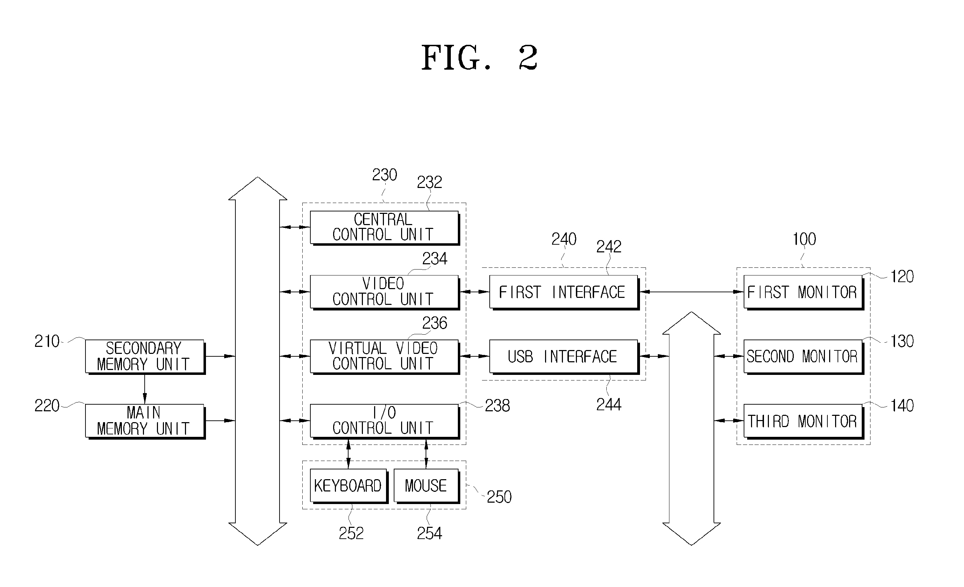

FIG. 2 is a block diagram showing a host device according to an exemplary embodiment of the present invention.

The host device 110 of FIG. 2 comprises a secondary memory unit 210, a main memory unit 220, a controller 230, an interface 240 and an operator 250. The secondary memory unit 210 functions as a storage unit, which stores programs or data, and data stored in the secondary memory unit 210 may remain even after the power source is turned off. The secondary memory unit 210 may be a magnetic tape (MT), a magnetic disk, a laser disk, a floppy disk, a hard disk and a compact disk (CD)-read only memory (ROM).

The main memory unit 220 functions as a storage unit capable of reading programs or data from the secondary memory unit 210 and launching the read programs or data. The main memory unit 220 may be a ROM in which data is retained even after the power source is turned off, or a random access memory (RAM), which is a volatile memory in which all data is deleted when the power source is turned off.

The controller 230 controls the entire operation of the display system. The controller 230 comprises a central control unit 232, a video control unit 234, a virtual video control unit 236 and an input/output (I/O) control unit 238.

The central control unit 232 controls the entire display system. If the central control unit 232 receives from the I/O control unit 238 notification that a monitor list display command is input, the central control unit 232 may generate a list of monitors connected to the host device 110. In this situation, the central control unit 232 may generate a monitor list in which the main monitor is represented by a symbol that is larger than those representing the other monitors. Additionally, if a video exchange command is input from the I/O control unit 238, the central control unit 232 may transfer a control signal to control the video control unit 234 and virtual video control unit 236 to change and read video data from the main memory unit 220.

The video control unit 234 reads the video data stored in the main memory unit 220, and generates a data format containing the video data in order to transmit the video data to the first monitor 120. The virtual video control unit 236 also reads the video data stored in the main memory unit 220, and generates a data format containing the video data in order to transmit the video data to the second monitor 130 or the third monitor 140. Here, the virtual video control unit 236 may process the video data displayed on the second monitor 130 or on the third monitor 140, and the video control unit 234 may process the video data displayed on the first monitor 120, so the virtual video control unit 236 is distinct from the video control unit 234. Additionally, if a USB interface 244 described later is used, a plurality of monitors in addition to the second monitor 130 and the third monitor 140 may also be connected to the host device 110, so the virtual video control unit 236 is provided here for convenience of description.

The I/O control unit 238 determines user commands input through the host device 110, and then transmits the user commands to the central control unit 232. If a video exchange command is input through the host device 110, the I/O control unit 238 may notify the central control unit 232 of the input video exchange command.

The interface 240 comprises a first interface 242 and a USB interface 244. The first interface 242 transmits the packets output from the video control unit 234 to the first monitor 120. The first interface 242 may be connected to the first monitor 120 using at least one of a digital visual interface (DVI) (not shown) and a USB port (not shown), so the video control unit 234 may generate packets in formats determined according to the type of port, and may output the generated packets to the first interface 242.

The USB interface 244 is connected to the second monitor 130 or to the third monitor 140 using the USB port (not shown). The virtual video control unit 236 generates packets in USB format containing video data, and outputs the generated packets to the USB interface 244.

The operator 250 may receive user operation commands, and transfer the user operation commands to the I/O control unit 238. The operator 250 may be attached to or detached from the display system. The operator 250 used in the host device 110 may be a keyboard 252, a mouse 254 or other input means. The keyboard 252 and the mouse 254 may be directly connected to the host device 110 via the USB cable.

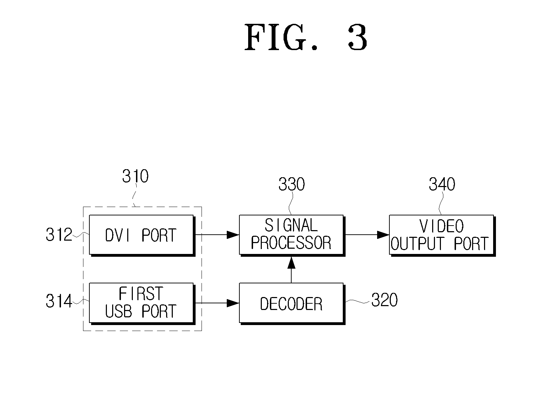

FIG. 3 is a block diagram showing the first monitor 120 used as a main monitor, according to an exemplary embodiment of the present invention. The first monitor 120 of FIG. 3 comprises an input unit 310, a decoder 320, a signal processor 330 and a video output port 340.

The input unit 310 comprises a DVI port 312 and a first USB port 314. The DVI port 312 is connected to the first interface 242 of the host device 110 via the DVI cable 124, to transmit packets in DVI format to the signal processor 330. The first USB port 314 is connected to the USB interface 244 of the host device 110 via the USB cable 124, to transmit packets in USB format to the decoder 320.

The decoder 320 decodes the video signal containing the packets in USB format transmitted from the first USB port 314, and transfers the decoded video signal to the signal processor 330. In this situation, the decoded video signal may be a signal complying with the transistor-transistor logic (TTL) standard.

The signal processor 330 performs signal processing, such as scaling, of the video signal output from the DVI port 312 or the decoder 320, so that the video signals may be converted to a displayable signal in low voltage differential signaling (LVDS) format. The video output port 340 outputs the displayable signal output by the signal processor 330 to a display module (not shown). In this situation, the video output port 340 may be connected to the display module via an LVDS cable.

As described above, in this exemplary embodiment of the present invention, it is assumed, for convenience of description, that the first monitor 120 connected to the host device 110 via not only the USB cable 122 but also the DVI cable 124 is used as a main monitor, and accordingly, the DVI port 312 is needed in the main monitor. However, since the second monitor 130 and the third monitor 140 are connected to the host device 110 as secondary monitors via only the USB cable 124, there is no need for the DVI port 312. Therefore, the secondary monitors may be configured in the same manner as the main monitor, except for the DVI port 312, so detailed description thereof will be omitted. Additionally, the secondary monitors may comprise the DVI port.

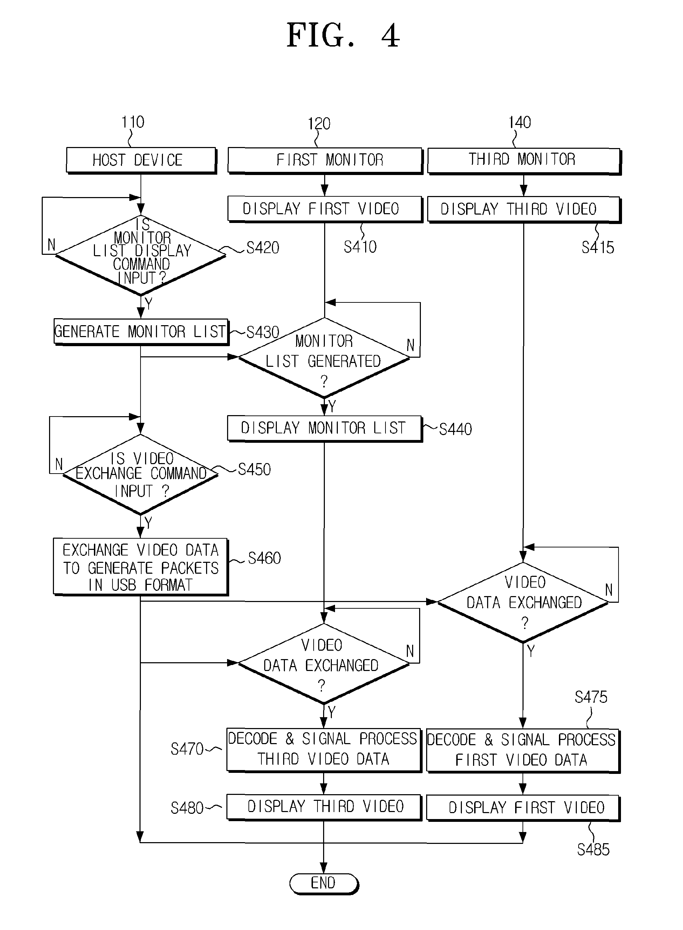

FIG. 4 is a flowchart explaining a process of exchanging videos and displaying the exchanged videos, according to an exemplary embodiment of the present invention.

Display units (not shown) of the first monitor 120 and the third monitor 140 may display a first video and a third video (S410 and S415), respectively. Specifically, the video control unit 234 may read first video data stored in the main memory unit 220, generate data in a format suitable for transmission to the first monitor 120, and then transmit the generated data to the first monitor 120 via the first interface 242. Accordingly, the first monitor 120 may display the first video corresponding to the first video data.

Assuming that the host device 110 is connected to the first monitor 120 and the third monitor 140 via the USB cable, in order to facilitate understanding of the description, the video control unit 234 may generate data in USB format containing the read first video data and transmit the generated data to the first monitor 120. Similarly, the virtual video control unit 236 may read a third video data stored in the main memory unit 220, generate data in USB format containing the read third video data, and then transmit the generated data to the third monitor 140.

The I/O control unit 238 may determine whether the monitor list display command is input (S420). In more detail, assuming that different videos are displayed on the first monitor 120 and the third monitor 140, and a user's workplace is adjacent to the first monitor 120, if the user desires to carry out work using the video displayed on the third monitor 140, the user may input a command to display the monitor list in order to exchange the video displayed on the first monitor 120 with the video displayed on the third monitor 140. As a result, the I/O control unit 238 may determine that the monitor list display command is input.

If it is determined that the monitor list display command is input (S420-Y), the central control unit 232 may generate a list of monitors connected to the host device 110 (S430). In this situation, the central control unit 232 may generate a monitor list using symbols representing each monitor. For example, numerals "1", "2" and "3" may denote the first monitor 120, second monitor 130 and third monitor 140, respectively, and a monitor list may be generated using the numerals. The central control unit 232 may then transmit the generated monitor list to the video control unit 234. Next, the video control unit 234 may generate packets containing the monitor list and transmit the generated packets to the first interface 242. The first interface 242 may then transmit the received packets to the first monitor 120. Additionally, if the monitor list display command is input, the I/O control unit 238 may determine that a command to change the current mode of the display system to a video exchange mode is input, and may thus change the current mode of the display system to the video exchange mode. Accordingly, the monitor list display command may be regarded as a mode change command, and thus the display system may be operated in the video exchange mode after receiving the monitor list display command.

The first monitor 120 may display the monitor list transferred from the host device 110 (S440).

The I/O control unit 238 may determine whether a video exchange command is input (S450). In more detail, the user may view the monitor list displayed on the first monitor 120, and may select a monitor for displaying a video which the user wishes to exchange with the video displayed on the first monitor 120. Accordingly, the I/O control unit 238 may determine that the video exchange command is input (S450 -Y).

The controller 230 may then exchange video data to generate packets in USB format which contain the exchanged video data to be displayed on the selected monitor (S460). Specifically, if the video exchange command is not input (S450-N), the video control unit 234 may generate first packets containing the first video data representing the video displayed on the first monitor 120, and the virtual video control unit 236 may generate third packets containing the third video data representing the video displayed on the third monitor 140.

However, since the video exchange command is input, the video control unit 234 may generate first packets so that the third video data may be contained in the first packets, and the virtual video control unit 236 may generate third packets so that the first video data may be contained in the third packets. This process relates to generation of the packets used to exchange the video data. Additionally, the controller 230 may generate the packets using the USB format. The video control unit 234 may transmit the generated first packets to the first interface 242, and the virtual video control unit 236 may transmit the generated third packets to the USB interface 244. The first interface 242 and the USB interface 244 may transmit the first packets and the third packets to the first monitor 120 and the third monitor 140, respectively.

The first monitor 120 may decode the third video data contained in the first packets, and may perform signal processing, such as scaling, of the decoded video data in order to generate a displayable signal (S470). The third monitor 140 may decode the first video data contained in the third packets, and may perform signal process, such as scaling, of the decoded video data in order to generate a displayable signal (S475).

Accordingly, the first monitor 120 may display the third video corresponding to the third video data (S480), and the third monitor 140 may display the first video corresponding to the first video data (S485).

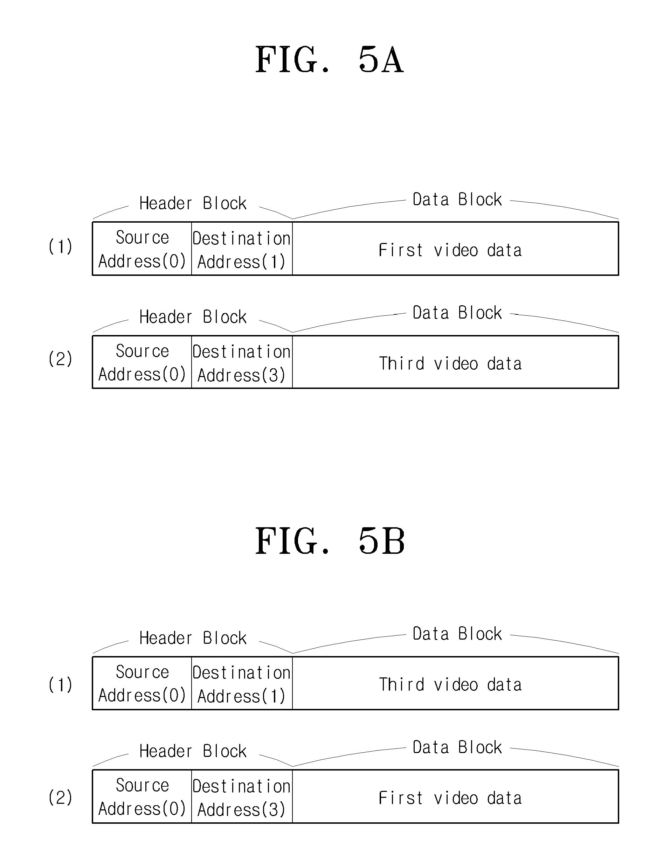

FIGS. 5A and 5B are diagrams showing packets generated according to whether a video exchange command is input, according to an exemplary embodiment of the present invention.

As shown in FIG. 5A, the first packets (1) are generated by the video control unit 234, and the third packets (2) are generated by the virtual video control unit 236, when the video exchange command is not input. The packets to be transmitted to the monitors comprise a header block comprising a source address field and a destination address field, and a data block comprising video data. If the video exchange command is not input, the video control unit 234 may enable the first packets (1) to be transmitted to the first monitor 120 to include the first video data, and enable the third packets (2) to be transmitted to the third monitor 140 to include the third video data.

Alternatively, if the video exchange command is input, the video control unit 234 may enable the first packets (1) to be transmitted to the first monitor 120 to include the third video data, and enable the third packets (2) to be transmitted to the third monitor 140 to include the first video data, as shown in FIG. 5B.

Although packets are generated by exchanging video data in this exemplary embodiment of the present invention, packets may also be generated by exchanging the destination addresses of the header blocks. If the destination addresses of the header blocks of the packets are exchanged, the video control unit 234 may output the first packets to the USB interface 244, and the virtual video control unit 236 may output the third packets to the first interface 242.

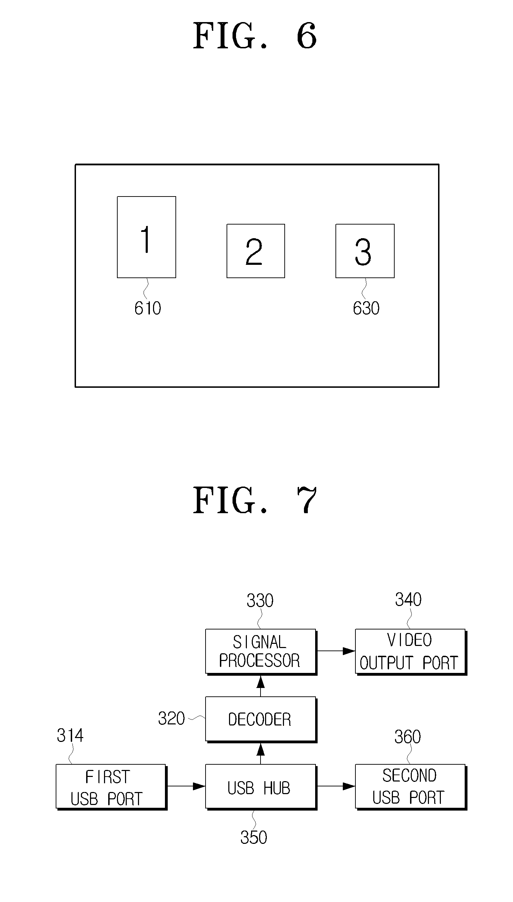

FIG. 6 is a diagram showing an example of a monitor list according to an exemplary embodiment of the present invention. The monitor list shown in FIG. 6 may comprise symbols each consisting of a rectangle containing a numeral to indicate a respective monitor. Here, a first symbol 610 representing the main monitor may be greater in size than a third symbol 630 representing another monitor. Accordingly, if the user selects a monitor for displaying a video which he wishes to exchange with another video, the video displayed on the selected monitor may be exchanged with the other video. For example, if a user selects the third symbol 630 identified by numeral "3" using a cursor, the central control unit 232 may determine that a command to exchange the videos displayed on the first monitor 120 and the third monitor 140 is input, and may exchange the videos according to the determined command.

The present invention is not limited to the symbols of the monitor list comprising numerals in rectangles. The monitor list may comprise text, marks, video, or other symbols, provided the user is able to distinguish the monitors in the monitor list.

In the exemplary embodiment of the present invention, a plurality of monitors are connected in parallel to a single host device, but the present invention is applicable to a situation in which a plurality of monitors are connected in series to a single host device in order to exchange videos and display the exchanged videos. In order to connect the plurality of monitors to a single host device in series, a USB hub may preferably be built in the monitors.

FIG. 7 is a block diagram showing another display system to which the present invention is applicable. In FIG. 7, a monitor comprises a USB hub 350 and a second USB port 360 in addition to the components of the monitor shown in FIG. 3. The USB hub 350 may transfer packets containing a destination address for its monitor to the decoder 320, and may transfer the remaining packets from among the packets in USB format received from the first USB port 314, to the second USB port 360. Accordingly, the second USB port 360 may be connected to other monitors, and so the monitors may be connected in series in the display system.

Although the monitor used as a main monitor in the exemplary embodiment of the present invention is connected to the host device 110 via not only the USB cable 122 but also the DVI cable 124, any monitor used by the user may be set to be the main monitor by the user. Accordingly, videos may be exchanged not only between the main monitor and the secondary monitor, but also between any two monitors.

Additionally, videos are exchanged between two monitors in the exemplary embodiment of the present invention, but the present invention is not limited thereto. For example, if the video exchange command is input in order to exchange a video displayed on a third monitor with a video displayed on a first monitor, the video that has been displayed on the third monitor may be displayed on the first monitor, the video that has been displayed on the first monitor may be displayed on a second monitor, and a video that has been displayed on a second monitor may be displayed on the third monitor.

Furthermore, packets in USB format are used to exchange videos in the exemplary embodiment of the present invention, but the present invention is applicable to a situation in which videos are exchanged using packets capable of transmitting video data, or a situation in which different types of packets are used in transmitting video data. In addition, although the host device 110 and monitors are connected wiredly, for example, by cables, according to the exemplary embodiment of the present invention, the present invention may be applied to a situation in which communication may be performed wirelessly between the host device 110 and monitors, or between a plurality of monitors.

The display system according to the exemplary embodiment of the present invention may be implemented as a computer readable recording medium. The computer readable recording medium may store data that will be read by a computer system in the above-described process. The computer readable recording medium may be a RAM, a ROM, a CD-ROM or an optical data storage device.

As described above, according to the exemplary embodiment of the present invention, a video displayed on a display apparatus is exchanged with another video displayed on another display apparatus in a display system in which a plurality of display apparatuses are connected to a single host device, so user convenience may increase.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A display control method by which a single host device (110) controls a plurality of display apparatuses (120, 130, 140), the method comprising:
generating first video data corresponding to a first video displayed on a first display apparatus;
generating second video data corresponding to a second video displayed on a second display apparatus;
if a video change command is input (S450), controlling the first and the second display apparatuses to display the second video on the first display apparatus (S460).

2. The method as claimed in claim 1, wherein the controlling controls the first and the second display apparatuses to display the first video on the second display apparatus.

3. The method as claimed in any one of claims 1 and 2, wherein the generating the first video data comprises generating a first packet containing the first video data, and
the generating the second video data comprises generating a second packet containing the second video data.

4. The method as claimed in claim 3, wherein the first packet comprises a first header block comprising a first source address field and a first destination address field, and a first data block comprising the first video data, and the second packet comprises a second header block comprising a second source address field and a second destination address field, and a second data block comprising the second video data.

5. The method as claimed in claim 4, wherein the controlling replaces the first video data with the second video data in the first data block.

6. The method as claimed in claim 4 or 5, wherein the controlling replaces the second video data with the first video data in the second data block.

7. The method as claimed in claim 4, wherein the controlling replaces an address for the first display apparatus with an address for the second display apparatus in the first destination address field.

8. The method as claimed in claim 7, wherein the controlling replaces an address for the second display apparatus with an address for the first display apparatus in the second destination address field.

9. The method as claimed in any one of claims 1 to 8, further comprising:
generating a list comprising the first and the second display apparatuses using symbols representing each of the first and the second of display apparatuses (S430).

10. The method as claimed in any one of claims 2 to 9, wherein the video data transmitted to the second display apparatus is video data transmitted from the host device through the first display apparatus.

11. The method as claimed in any one of claims 1 to 10, further comprising:
determining whether the video change command is input so that the second video displayed on the second display apparatus is displayed on the first display apparatus.

12. A display system in which a single host device controls a plurality of display apparatuses,
wherein the host device comprises:
an interface (240) which transmits video data to the plurality of display apparatuses; and
a controller (230) which generates first video data corresponding a first video displayed on a first display apparatus and second video data corresponding a second video displayed on a second display apparatus,
the controller being arranged for controlling the first and the second display apparatus to display the second video on the first display apparatus, if a video change command is input.

13. The display system as claimed in claim 12, wherein the controller (230) is arranged so that the video data transmitted to the first display apparatus is video data transmitted from the host device through the second display apparatus.

14. The display system as claimed in any one of claims 12 and 13, wherein the interface (240) comprises a universal serial bus (USB) interface (244).

15. A computer readable recording medium storing a program for performing a display control method by which a single host device controls a plurality of display apparatuses, the method being as claimed in any one of claims 1 to 10
